Europäisches Patentamt

European Patent Office

Office européen des brevets

(19)

(11) EP 0 614 300 B1

(12) EUROPÄISCHE PATENTSCHRIFT

(45) Veröffentlichungstag und Bekanntmachung des Hinweises auf die Patenterteilung:
27.10.1999 Patentblatt 1999/43

(51) Int Cl.⁶: H04L 27/38

(21) Anmeldenummer: 94102101.6

(22) Anmeldetag: 11.02.1994

(54) **QAM-Empfänger mit Schaltungsmitteln zur Korrektur eines Empfängerquadraturfehlers**

QAM receiver having means for correcting the receiver quadrature error

Récepteur de signaux MAQ comportant des moyens pour la correction d'erreurs de quadrature du récepteur

(84) Benannte Vertragsstaaten:
CH DE FR GB IT LI SE

(30) Priorität: 05.03.1993 DE 4306881

(43) Veröffentlichungstag der Anmeldung:
07.09.1994 Patentblatt 1994/36

(73) Patentinhaber: ANT Nachrichtentechnik GmbH
D-71522 Backnang (DE)

(72) Erfinder: Herbig, Peter
D-71522 Backnang (DE)

(56) Entgegenhaltungen:
EP-A- 0 415 406     DE-C- 4 101 802

**Beschreibung**

Die vorliegende Erfindung betrifft einen QAM-Empfänger, der erste Schaltungsmittel aufweist, welche die Inphase- und Quadratursignalkomponente eines empfangenen QAM (quadraturamplitudenmodulierten) Signals mit Koeffizienten bewertet, die von dem Quadraturfehler der im Empfänger demodulierten QAM-Signalkomponenten abhängen, und der zweite Schaltungsmittel aufweist, die aus Entscheiderfehlern, welche aus der Ablage der von Entscheidern entschiedenen Inphase- und Quadratursignalwerte gegenüber den von den ersten Schaltungsmitteln den Entscheidern zugeführten Inphase- und Quadratursignalwerten resultieren, einen Korrekturwert für den Quadraturfehler herleiten.

Ein derartiger QAM-Empfänger ist aus der DE 41 01 802 C1 bekannt. Dieser QAM-Empfänger weist Schaltungsmittel auf, die trotz eines ungeregelten Festfrequenzoszillators sowohl Quadraturfehler, das heißt eine Abweichung von der 90°-Zuordnung des Inphase- und des Quadraturträgers, die bei der QAM Modulation im Sender als auch Quadraturfehler, welche bei der Demodulation im Empfänger entstehen, korrigiert. Es hat sich gezeigt, daß bei dem bekannten Korrekturverfahren das Fangverhalten des Empfängers bei Kanalverzerrungen nicht sehr gut ist. Außerdem enthält das bekannte Korrektursignal einen sehr hohen Rausch- und nur einen geringen Nutzanteil.

Aus dem Dokument EP-A-0 415 406 ist ebenfalls ein herkömmlicher QAM-Empfänger bekannt.

Der Erfindung liegt nun die Aufgabe zugrunde, einen QAM-Empfänger der eingangs genannten Art anzugeben, in dem ein im Empfänger erzeugter Quadraturfehler möglichst exakt korrigiert wird.

Erfindungsgemäß wird diese Aufgabe durch die Merkmale des Anspruchs 1 gelöst. Eine vorteilhafte Ausführung der Erfindung geht aus dem Unteranspruch hervor.

Mit Hilfe der erfindungsgemäßen Gradientenbildung des Entscheiderfehlers, wird ermittelt, ob der im Empfänger geschätzte Empfängerquadraturfehler größer oder kleiner als der tatsächliche Fehler ist. Mit dem aus der Gradientenbildung resultierenden Vorzeichen kann ein Iterationsverfahren zu diesem tatsächlichen Fehler konvergieren. Die Gradientenbildung läßt sich, wie aus dem Anspruch 2 hervorgeht, mit sehr einfachen Schaltungsmitteln durchführen.

Anhand eines in der Zeichnung dargestellten Ausführungsbeispiels wird nachfolgend die Erfindung näher erläutert.

Fig. 1 zeigt ein komplettes QAM-Übertragungssystem mit Sender und Empfänger und

Fig. 2 zeigt eine Schaltungsanordnung zum Ermitteln von Korrekturwerten für Sender- und Empfängerquadraturfehlern.

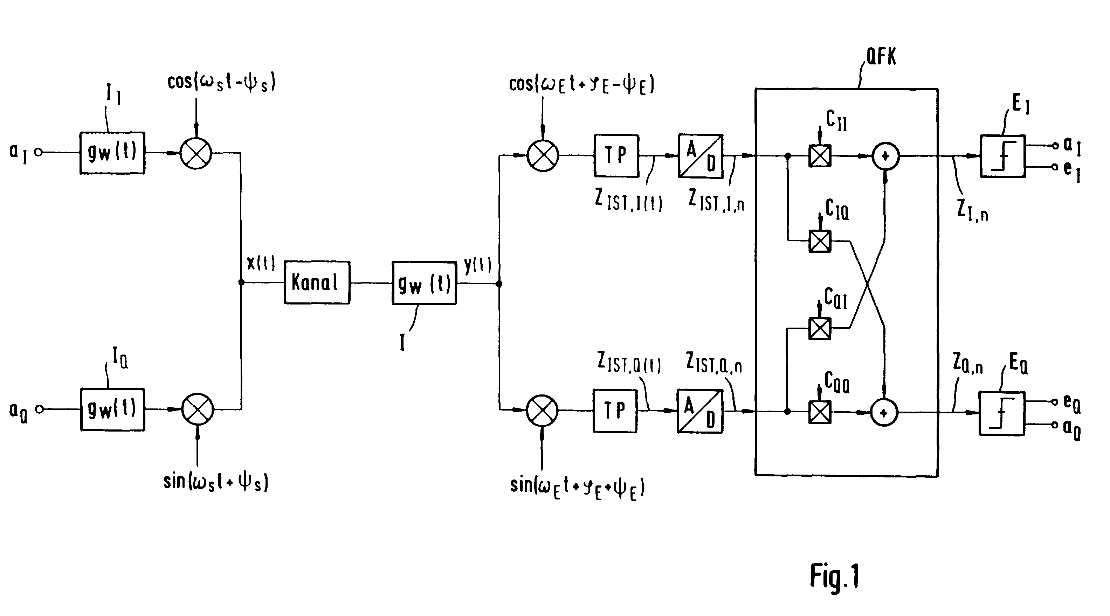

Wie der Fig. 1 zu entnehmen ist, erzeugen die Sendersignalwerte $a_I$ und $a_Q$, aufzufassen als Inphase- und Quadraturanteil komplexer Symbole aus einem QAM-Alphabet, nach der Impulsformung $I_I$, $I_Q$ mit der Impulsantwort $g_w(t)$ (Wurzel-Nyquist-Impuls) das zu modulierende Basisbandsignal.

Der Sendermodulator besitzt die Modulationsfrequenz $_S$ und den Senderquadraturfehler $\psi_S$. Auf dem Kanal wird somit das Signal

$$x(t) \;=\; \sum_n a_{I,n}\, g_W(t - nT) \cdot \cos(\omega_S t - \psi_S)$$
$$+ \; \sum_n a_{Q,n}\, g_W(t - nT) \cdot \sin(\omega_S t + \psi_S) \qquad (1)$$

erzeugt. Für den Sonderfall des unverzerrten Kanals gilt dann enpfangsseitig nach der Impulsformung

$$y(t) \;=\; \sum_n a_{I,n}\, g(t - nT) \cdot \cos(\omega_S t - \psi_S)$$
$$+ \; \sum_n a_{Q,n}\, g(t - nT) \cdot \sin(\omega_S t + \psi_S), \qquad (2)$$

wobei g(t) das Ergebnis der Faltung zweier $g_w(t)$-Impulse ist. Der Einfachheit halber wird hierbei angenommen, daß die empfangsseitige Impulsformung im Bandpaßbereich mit der Bezugsfrequenz $\omega_S$ stattfindet.

Durch die empfangsseitige Demodulation und anschließende Unterdrückung der Summenfrequenzen in den beiden Tiefpaßfiltern TP entstehen daraus die nun zu digitalisierenden A/D-Wandler Eingangssignale $z_{Ist,I}(t)$ und $z_{Ist,Q}(t)$. Es ist sofort einsichtig, daß bei perfekter Demodulation, also bei identischen Trägerfrequenzen auf der Empfangs- und Sendeseite $\omega_E = \omega_S$, verschwindendem Trägerphasenfehler auf der Empfangsseite $\varphi_E = 0$, verschwindendem Quadraturfehler auf der Sendeweite $\psi_S = 0$ und verschwindendem Quadraturfehler auf der Empfangsseite $\psi_E = 0$ für diese Signale folgende Gleichungen gelten:

$$z_{Soll,I}(t) = \sum_n a_{I,n}\, g(t - nT) \qquad (3)$$

$$z_{Soll,Q}(t) = \sum_n a_{Q,n}\, g(t - nT). \qquad (4)$$

Dagegen gilt im allgemeinen Fall nach entsprechenden trigonometrischen Umformungen und Benutzung von (3) und (4):

$$z_{Ist,I}(t) = z_{Soll,I}(t)\cos(\Delta\omega t + \varphi_E + \psi_S - \psi_E)$$
$$- z_{Soll,Q}(t)\sin(\Delta\omega t + \varphi_E - \psi_S - \psi_E) \qquad (5)$$

$$z_{Ist,Q}(t) = z_{Soll,Q}(t)\cos(\Delta\omega t + \varphi_E - \psi_S + \psi_E)$$
$$+ z_{Soll,I}(t)\sin(\Delta\omega t + \varphi_E + \psi_S + \psi_E). \qquad (6)$$

Die Differenzfrequenz wird hierbei durch

$$\Delta\omega = \omega_E - \omega_S \qquad (7)$$

gebildet. Diese Signale werden nun im Symboltakt T abgetastet:

$$z_{Ist,I,n} = z_{Soll,I,n}\cos(n\varphi_\Delta + \varphi_E + \psi_S - \psi_E) -$$
$$z_{Soll,Q,n}\sin(n\varphi_\Delta + \varphi_E - \psi_S - \psi_E) \qquad (8)$$

$$z_{Ist,Q,n} = z_{Soll,Q,n}\cos(n\varphi_\Delta + \varphi_E - \psi_S + \psi_E) +$$
$$z_{Soll,I,n}\sin(n\varphi_\Delta + \varphi_E + \psi_S + \psi_E). \qquad (9)$$

Hierbei wird vereinfachend

$$\varphi_\Delta = \Delta\omega T \qquad (10)$$

geschrieben und die irrelevante Abtastphase vernachlässigt. Der eigentliche Quadraturfehlerkompensator QFK besteht lediglich aus den vier unabhängigen Koeffizienten $C_{II}$, $C_{IQ}$, $C_{QI}$ und $C_{QQ}$ und kann somit auch als entarteter Transversalentzerrer mit nur einem (komplexen asymmetrischen) Koeffizienten betrachtet werden. Die fehlerkompensierten Eingangssignale der Entscheider $E_I$, $E_Q$ sind demnach:

$$z_{I,n} = z_{\text{Ist, I},n}\, C_{II} + z_{\text{Ist,Q},n}\, C_{QI} \tag{11}$$

$$z_{Q,n} = z_{\text{Ist, I},n}\, C_{IQ} + z_{\text{Ist,Q},n}\, C_{QQ}. \tag{12}$$

Werden die Koeffizienten in (11) und (12) auf folgende optimale Werte eingestellt:

$$C_{II,\text{opt}}(n) = \frac{\cos(n\varphi_\Delta + \varphi_E - \psi_S + \psi_E)}{\cos 2\psi_S \, \cos 2\psi_E} \tag{13}$$

$$C_{IQ,\text{opt}}(n) = \frac{-\sin(n\varphi_\Delta + \varphi_E + \psi_S + \psi_E)}{\cos 2\psi_S \, \cos 2\psi_E} \tag{14}$$

$$C_{QI,\text{opt}}(n) = \frac{\sin(n\varphi_\Delta + \varphi_E - \psi_S - \psi_E)}{\cos 2\psi_S \, \cos 2\psi_E} \tag{15}$$

$$C_{QQ,\text{opt}}(n) = \frac{\cos(n\varphi_\Delta + \varphi_E + \psi_S - \psi_E)}{\cos 2\psi_S \, \cos 2\psi_E} \tag{16}$$

so resultieren aus (11) und (12) tatsächlich wieder

$$z_{I,n} = z_{\text{Soll, I},n} \tag{17}$$

$$z_{Q,n} = z_{\text{Soll,Q},n}. \tag{18}$$

Die Optimaleinstellungen sind also zeitabhängig. Damit ist zunächst gezeigt, daß es grundsätzlich möglich ist, die beim Modulationsprozess entstehenden Quatraturfehler nachträglich wieder zu eliminieren. Es ist allerdings zu beachten. daß die Cosinusterme im Nenner von (13) bis (16) bei größeren Quadraturfehlern zu einer merklichen Rauschverstärkung führen.

Prinzipiell ließen sich zur Adaption der Koeffizienten $C_{II}$, $C_{IQ}$, $C_{QI}$, $C_{QQ}$ des Qudraturfehlerkompensators QFK die gleichen Verfahren anwenden, wie sie auch bei Kanalentzerrern üblich sind, also beispielsweise der least-mean square oder der zero-forcing Algorithmus. In der Praxis wären diese Algorithmen allerdings überfordert, da sich die Werte der Koeffizienten ja ständig im Rhythmus der Differenzfrequenz $\Delta\omega$ ändern müßten. Aus diesem Grund werden nicht die Koeffizienten selbst geregelt, sondern zunächst in drei unabhängigen Regelkreisen nur die drei Schätzphasen, nämlich Trägerphase $\hat{\varphi}_E$, Sendequadraturfehler $\hat{\psi}_S$ und Empfangsquadraturfehler $\hat{\psi}_E$.

Die Schätzung von $\varphi_E$ ist, wie bei allen Trägerableitungen üblich, zur Ausregelung von Frequenzabweichnungen mit einem Regelkreis 2.Ordnung durchzuführen. Anschließend werden in einem Rechenwerk aus den Schätzphasen die vier Koeffizienten analog zu (13) bis (16) ermittelt:

$$C_{II}(n) = \frac{\cos(n\hat{\varphi}_\Delta + \hat{\varphi}_E - \hat{\psi}_S + \hat{\psi}_E)}{\cos 2\hat{\psi}_S \, \cos 2\hat{\psi}_E} \tag{19}$$

$$C_{IQ}(n) = \frac{-\sin(n\hat{\varphi}_\Delta + \hat{\varphi}_E + \hat{\psi}_S + \hat{\psi}_E)}{\cos 2\hat{\psi}_S \, \cos 2\hat{\psi}_E} \tag{20}$$

$$C_{QI}(n) = \frac{\sin(n\hat{\varphi}_\Delta + \hat{\varphi}_E - \hat{\psi}_S - \hat{\psi}_E)}{\cos 2\hat{\psi}_S \, \cos 2\hat{\psi}_E} \tag{21}$$

EP 0 614 300 B1

$$C_{QQ}(n) = \frac{\cos(n\hat{\varphi}_\Delta + \hat{\varphi}_E + \hat{\psi}_S - \hat{\psi}_E)}{\cos 2\hat{\psi}_S \cos 2\hat{\psi}_E}. \tag{22}$$

Der zeitvariante Anteil $\varphi_\Delta$ und der zeitinvariante Anteil $\varphi_E$ werden hierbei, wie oben schon erwähnt, in einem Regelkreis 2.Ordnung gemeinsam geschätzt. Innerhalb dieses Regelkreises erscheint dann automatisch die Schätzgröße $\hat{\varphi}_\Delta$ der empfangsseitigen Frequenzablage.

Dies zeigt sich auch in der Formulierung der drei Regelkreise als Iterationsprozess:

$$\hat{\varphi}_{E,n+1} = \hat{\varphi}_{E,n} - \alpha_1 \, \Phi(z_n) \tag{23}$$

$$\hat{\varphi}_{\Delta,n+1} = \hat{\varphi}_{\Delta,n} - \alpha_2 \, \Phi(z_n) \tag{24}$$

$$n\hat{\varphi}_{\Delta,n+1} = n\hat{\varphi}_{\Delta,n} + \hat{\varphi}_{\Delta,n} \tag{25}$$

$$\hat{\psi}_{S,n+1} = \hat{\psi}_{S,n} - \alpha_S \, \Psi_S(z_n) \tag{26}$$

$$\hat{\psi}_{E,n+1} = \hat{\psi}_{E,n} - \alpha_E \, \Psi_E(z_n). \tag{27}$$

Die Gleichungen (23) bis (25) bilden hierbei gemeinsam den Regelkreis 2.Ordnung. $\alpha_1$, $\alpha_2$, $\alpha_S$ und $\alpha_E$ sind die Verstellschrittgrößen zur endgültigen Dimensionierung der Regelkreise und $\Phi(z_n)$, $\Psi_S(z_n)$ und $\Psi_E(z_n)$ die drei Korrekturterme zur schrittweisen Adaption der entsprechenden Schätzphase.

Die Korrekturterme sollen jeweils die Gradienten des aktuellen quadratischen Entscheiderfehlers sein, berechnet auf Grund des (der Einfachheit halber als komplex zu betrachtenden) Entscheidereingangssignals $z_{I,n}$ und $z_{Q,n}$.

Geht man davon aus, daß die Entscheider $E_I$; $E_Q$ korrekte Entscheidungen treffen, so berechnen sich die Entscheiderfehler $e_{I,n}$ und $e_{Q,n}$ einfach aus der Differenz zwischen den Entscheidereingangs- und -ausgangssignalen:

$$e_{I,n} = z_{I,n} - \alpha_{I,n} \tag{28}$$

$$e_{Q,n} = z_{Q,n} - \alpha_{Q,n}. \tag{29}$$

Für die Berechnung der einzelnen Gradienten gilt dann (mit Unterdrückung der Zeitindices n):

$$\Phi(z) \;=\; \text{grad}_{\hat{\varphi}_E}(ee^\bullet) = 2e_I \frac{\delta e_I}{\delta \hat{\varphi}_E} + 2e_Q \frac{\delta e_Q}{\delta \hat{\varphi}_E} \tag{30}$$

$$\Psi_S(z) \;=\; \text{grad}_{\hat{\psi}_S}(ee^\bullet) = 2e_I \frac{\delta e_I}{\delta \hat{\psi}_S} + 2e_Q \frac{\delta e_Q}{\delta \hat{\psi}_S} \tag{31}$$

$$\Psi_E(z) \;=\; \text{grad}_{\hat{\psi}_E}(ee^\bullet) = 2e_I \frac{\delta e_I}{\delta \hat{\psi}_E} + 2e_Q \frac{\delta e_Q}{\delta \hat{\psi}_E}. \tag{32}$$

Dabei ist $e = e_I + j\,e_Q$ und $e*$ die konjugiert komplexe Größe dazu.

Um diese Gradienten explizit berechnen zu können, ist es notwendig, die Entscheiderfehler $e_I$ und $e_Q$ in Abhängigkeit aller Fehler- und Schätzphasen zu kennen. Dazu werden die Gleichungen (8) und (9) sowie (19) bis (22) in (11) und (12) eingesetzt und davon entsprechend (28) und (29) die entschiedenen Werte $a_{I,n}$ und $a_{Q,n}$ abgezogen.

Unterstellt man auf der Empfangsseite zumindest die Kenntnis der sendeseitigen Trägerfrequenz ($\hat{\varphi}_\Delta = \varphi_\Delta$), erhält man nach einigen trigonometrischen Umformungen schließlich:

$$e_{I,n} = \frac{1/2}{\cos 2\hat{\psi}_S \cos 2\hat{\psi}_E} \cdot$$

$$(+z_{Soll,I,n} \cos(+\varphi_E - \hat{\varphi}_E + \psi_S + \hat{\psi}_S - \psi_E - \hat{\psi}_E)$$

$$+z_{Soll,I,n} \cos(2n\varphi_\Delta + \varphi_E + \hat{\varphi}_E + \psi_S - \hat{\psi}_S - \psi_E + \hat{\psi}_E)$$

$$-z_{Soll,Q,n} \sin(+\varphi_E - \hat{\varphi}_E - \psi_S + \hat{\psi}_S - \psi_E - \hat{\psi}_E)$$

$$-z_{Soll,Q,n} \sin(2n\varphi_\Delta + \varphi_E + \hat{\varphi}_E - \psi_S - \hat{\psi}_S - \psi_E + \hat{\psi}_E)$$

$$+z_{Soll,Q,n} \sin(-\varphi_E + \hat{\varphi}_E + \psi_S - \hat{\psi}_S - \psi_E - \hat{\psi}_E)$$

$$+z_{Soll,Q,n} \sin(2n\varphi_\Delta + \varphi_E + \hat{\varphi}_E - \psi_S - \hat{\psi}_S + \psi_E - \hat{\psi}_E)$$

$$+z_{Soll,I,n} \cos(+\varphi_E - \hat{\varphi}_E + \psi_S + \hat{\psi}_S + \psi_E + \hat{\psi}_E)$$

$$-z_{Soll,I,n} \cos(2n\varphi_\Delta + \varphi_E + \hat{\varphi}_E + \psi_S - \hat{\psi}_S + \psi_E - \hat{\psi}_E))$$

$$-\alpha_{I,n} \tag{33}$$

$$e_{Q,n} = \frac{1/2}{\cos 2\hat{\psi}_S \cos 2\hat{\psi}_E} \cdot$$

$$(+z_{Soll,Q,n} \cos(+\varphi_E - \hat{\varphi}_E - \psi_S - \hat{\psi}_S + \psi_E + \hat{\psi}_E)$$

$$+z_{Soll,Q,n} \cos(2n\varphi_\Delta + \varphi_E + \hat{\varphi}_E - \psi_S + \hat{\psi}_S + \psi_E - \hat{\psi}_E)$$

$$+z_{Soll,I,n} \sin(+\varphi_E - \hat{\varphi}_E + \psi_S - \hat{\psi}_S + \psi_E + \hat{\psi}_E)$$

$$+z_{Soll,I,n} \sin(2n\varphi_\Delta + \varphi_E + \hat{\varphi}_E + \psi_S + \hat{\psi}_S + \psi_E - \hat{\psi}_E)$$

$$-z_{Soll,I,n} \sin(-\varphi_E + \hat{\varphi}_E - \psi_S + \hat{\psi}_S + \psi_E + \hat{\psi}_E)$$

$$-z_{Soll,I,n} \sin(2n\varphi_\Delta + \varphi_E + \hat{\varphi}_E + \psi_S + \hat{\psi}_S - \psi_E + \hat{\psi}_E)$$

$$+z_{Soll,Q,n} \cos(+\varphi_E - \hat{\varphi}_E - \psi_S - \hat{\psi}_S - \psi_E - \hat{\psi}_E)$$

$$-z_{Soll,Q,n} \cos(2n\varphi_\Delta + \varphi_E + \hat{\varphi}_E - \psi_S + \hat{\psi}_S - \psi_E + \hat{\psi}_E))$$

$$-\alpha_{Q,n}. \tag{34}$$

An Hand von (33) und (34) kann man nun zeigen, daß die Anteile mit der doppelten Differenzfrequenz $2n\varphi_\Delta$ nun für den Fall $\hat{\psi}_E = \psi_E$ verschwinden, die Korrektur des Empfangsquadraturfehlers also in jedem Fall vor einem eventuellen Kanalentzerrer durchzuführen ist.

Weiter läßt sich feststellen, daß neben der Lösung $\hat{\varphi}_E = \varphi_E$, $\hat{\psi}_S = \psi_S$ und $\hat{\psi}_E = \psi_E$ noch ein zweiter Lösungssatz mit $\hat{\varphi}_E = \varphi_E \pm 90°$, $\hat{\psi}_S = -\psi_S$ und $\hat{\psi}_E = \psi_E$ existiert. Dieser zweite Lösungssatz garantiert die 90°-Phaseninvarianz des Empfängers, wenn auch mit invertiertem Schätzwinkel für den Senderquadraturfehler. Er führt zu dem Ergebnis $z_{Ist,I} = \pm z_{Soll,Q}$ und $z_{Ist,Q} = \mp z_{Soll,I}$, also zu der bekannten Vertauschung zwischen dem Inphase- und Quadraturkanal. Aus diesem Ergebnis kann man schon jetzt ablesen, daß der Empfangsquadraturfehler auch bei unbekannter Senderträgerphase ermittelt werden kann, der Quadraturfehler des Senders dagegen erst nach dem endgültigen Einrasten des eigentlichen Trägerphasenregelkreises.

Im folgenden werden nun durch Differenzierung von (33) und (34) die Gradienten $\Psi_S(z)$ und $\Psi_E(z)$ berechnet. Da zunächst nur der tracking mode (alle Regelschleifen eingerastet) interessiert, werden diese Gradienten im Arbeitspunkt $\hat{\psi}_S = \psi_S$ und $\hat{\psi}_E = \psi_E$ angegeben.

Die Ermittlung des Trägerphasenschätzwertes $\hat{\varphi}_E$ über den Gradienten $\Phi(z)$ soll hier nicht behandelt werden.

Der Gradient $\Psi_S$ für die Schätzung der Sendequadraturfehlers $\hat{\psi}_S$ wird auf folgende Weise ermittelt:

Bei der Differenzierung nach $\psi$ soll folgende, für kleine $\hat{\psi}$ gültige Näherung verwendet werden:

$$\frac{\delta}{\delta\hat{\psi}}\frac{f(\hat{\psi})}{\cos 2\hat{\psi}} = \frac{f'(\hat{\psi})\cos 2\hat{\psi} + 2f(\hat{\psi})\sin 2\hat{\psi}}{(\cos 2\hat{\psi})^2} \approx \frac{f'(\hat{\psi})}{\cos 2\hat{\psi}}. \tag{35}$$

Die gleichen Überlegungen wie oben (z statt $z_{Soll}$) führen dann für den Gradienten $\Psi_S(z)$ auf eine ganz ähnliche Beziehung:

$$\Psi_S(z) = \frac{-2e_I}{\cos 2\psi_S}(z_Q + z_I \sin 2\psi_S)$$

$$- \frac{2e_Q}{\cos 2\psi_S}(z_I + z_Q \sin 2\psi_S)$$

$$\approx -2(e_I z_Q + e_Q z_I) = -2\,\mathrm{Im}(ez). \tag{36}$$

Diese letzte Näherung wird in herkömmlichen Empfängern üblicherweise als Regelkriterium zur Regelung der 90°-Zuordnung der Trägerschwingungen verwendet.

Daneben existiert aber noch eine zweite Darstellung von $\Psi_S$, welche nicht auf der Variablen $z_{Soll}$, sondern auf $z_{Ist}$ aufbaut:

$$\Psi_S(z_{Ist}) =$$

$$+ \frac{2e_I}{\cos 2\psi_S \cos 2\psi_E}(+z_{Ist,I}\sin(n\varphi_\Delta + \varphi - \psi_S + \psi_E)$$

$$-z_{Ist,Q}\cos(n\varphi_\Delta + \varphi - \psi_S - \psi_E))$$

$$+ \frac{2e_Q}{\cos 2\psi_S \cos 2\psi_E}(-z_{Ist,Q}\sin(n\varphi_\Delta + \varphi + \psi_S - \psi_E)$$

$$-z_{Ist,I}\cos(n\varphi_\Delta + \varphi + \psi_S + \psi_E)). \tag{37}$$

Man kann nun zeigen, daß (37) genau dann mit der Näherung von (36) identisch ist, wenn in (37) alle Vorzeichen von $\psi_S$ invertiert werden. In diesem Fall lassen sich mit Hilfe von (19) bis (22) alle Sinus/Cosinus-Terme eliminieren und die Äquivalenz zu (36) wird sofort augenscheinlich (siehe hierzu auch (11) und (12)):

$$\Psi_S(z_{Ist}) \approx 2e_I(-C_{IQ}\,z_{Ist,I} - C_{QQ}\,z_{Ist,Q})$$

$$+ 2e_Q(-C_{QI}\,z_{Ist,Q} - C_{II}\,z_{Ist,I}). \tag{38}$$

Diese Näherung ist damit so interpretierbar, als sei sie durch kleine Winkelfehler in den Argumenten der Sinus/Cosinus-Funktionen zustandegekommen. Sie wird sich deshalb in den achsnahen Gebieten der komplexen Ebene von $z_{Ist}$ als Vorzeichenfehler im geschätzten Gradienten auswirken. Da $z_{Ist}$ aber für $\Delta\omega \neq 0$ in der komplexen Ebene ständig 'rotiert', kann dieser Effekt für kleine Winkel von $\psi_S$ und ausreichend großer Mittelungsdauer der Verstellinformation völlig vernachlässigt werden.

Bei der Berechnung von $\Psi_E$ für die Schätzung des Empfängerquadraturfehlers $\hat{\psi}_E$ zeigt sich, daß eine einfache auf $z_{Soll}$ aufbauende Formulierung überhaupt nicht existiert. Das Korrektursignal zur Regelung von $\psi_E$ muß also

in diesem Fall aus dem Empfangsignal $z_{\text{ist}}$ konstruiert werden (wieder mit Verwendung von (35)):

$$\Psi_E(z_{\text{ist}}) =$$

$$+ \frac{2e_I}{\cos 2\psi_S \cos 2\psi_E} \left(-z_{\text{ist},I} \sin(n\varphi_\Delta + \varphi - \psi_S + \psi_E)\right.$$

$$\left. -z_{\text{ist},Q} \cos(n\varphi_\Delta + \varphi - \psi_S - \psi_E)\right)$$

$$+ \frac{2e_Q}{\cos 2\psi_S \cos 2\psi_E} \left(+z_{\text{ist},Q} \sin(n\varphi_\Delta + \varphi + \psi_S - \psi_E)\right.$$

$$\left. -z_{\text{ist},I} \cos(n\varphi_\Delta + \varphi + \psi_S + \psi_E)\right). \qquad (39)$$

Wie auch (37) verlangt diese Vorschrift die Berechnung aufwendiger Sinus/Cosinus-Terme. Da dies bei einer Schaltungsimplementierung möglichst zu vermeiden ist, soll auch hier eine Näherung angegeben werden. In Anlehnung an die Näherung von $\Psi_S$ werden dazu wieder alle Vorzeichen von $\psi_S$ invertiert - allein um das Ergebnis dann mit Hilfe der Koeffizienten des Quadraturfehlerkompensators QFK ausdrücken zu können:

$$\Psi_E(z_{\text{ist}}) \approx 2e_I \left(+C_{IQ} z_{\text{ist},I} - C_{QQ} z_{\text{ist},Q}\right)$$

$$+ 2e_Q \left(+C_{QI} z_{\text{ist},Q} - C_{II} z_{\text{ist},I}\right). \qquad (40)$$

Auch für diese Näherung gilt die oben getroffene Aussage hinsichtlich der vernachlässigbaren Auswirkung auf die Stabilität des Regelverhaltens.

Mit (38) und (40) stehen somit Berechnungsvorschriften für die Gradienten $\Psi_S$ und $\Psi_E$ zur Verfügung, welche völlig ohne aufwendige trigonometrische Winkelfunktionen auskommen.

Zudem müssen die einzelnen Produktterme sowieso ermittelt werden (vergleiche (11) und (12)) und sind deshalb im Empfänger bekannt. Dadurch kann der Algorithmus nochmals vereinfacht werden.

Zur Regelung der Quadraturfehler $\psi_S$ und $\psi_E$ sollen die Korrekturwerte $\Psi_S$ und $\Psi_E$ auf reine Vorzeichenoperationen durch Anwendung von sign-Funktionen wie folgt reduziert werden:

$$\begin{aligned}
\tilde{\Psi}_S(z) \;=\; & \operatorname{sign}(e_I)\,(-\operatorname{sign}(C_{IQ}\, z_{\text{ist},I}) \\
& \qquad -\operatorname{sign}(C_{QQ}\, z_{\text{ist},Q})) \\
+\; & \operatorname{sign}(e_Q)\,(-\operatorname{sign}(C_{QI}\, z_{\text{ist},Q}) \\
& \qquad -\operatorname{sign}(C_{II}\, z_{\text{ist},I})) \qquad (41)
\end{aligned}$$

$$\begin{aligned}
\tilde{\Psi}_E(z) \;=\; & \operatorname{sign}(e_I)\,(+\operatorname{sign}(C_{IQ}\, z_{\text{ist},I}) \\
& \qquad -\operatorname{sign}(C_{QQ}\, z_{\text{ist},Q})) \\
+\; & \operatorname{sign}(e_Q)\,(+\operatorname{sign}(C_{QI}\, z_{\text{ist},Q}) \\
& \qquad -\operatorname{sign}(C_{II}\, z_{\text{ist},I})). \qquad (42)
\end{aligned}$$

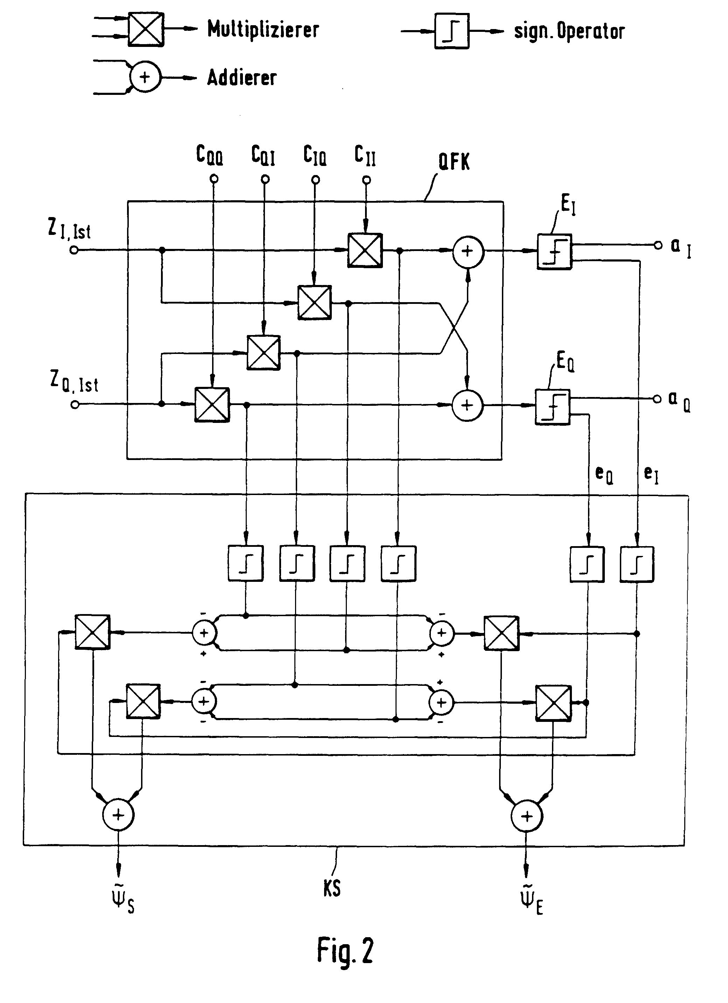

Wie diese beiden in (41) und (42) dargestellten Korrekturwerte $\tilde{\Psi}_S$ und $\tilde{\Psi}_E$ ermittelt werden können, zeigt die Schaltung KS in Fig. 2. Sie besteht lediglich aus Multiplizierern, Addierern und Sign-Funktions - Operatoren (deren Schaltungssymbole sind oberhalb der Schaltung in Fig. 2 erläutert).

**Patentansprüche**

1. QAM - Empfänger, der erste Schaltungsmittel (QFK) aufweist, welche die Inphase- und Quadratursignalkomponente eines empfangenen QAM (quadraturamplitudanmodulierten) Signals mit Koeffizienten bewertet, die von dem Quadraturfehler der im Empfänger demodulierten QAM - Signalkomponenten abhängen, und der zweite Schaltungsmittel (KS) aufweist, die aus Entscheiderfehlern ($e_I$, $e_Q$) welche ein der Ablage der von Entscheidern ($E_I$, $E_Q$) entschiedenen Inphase- und Quadratursignalwerte gegenüber den von den ersten Schaltungsmitteln (QTK) den Entscheidern ($E_I$, $E_Q$) zugeführten Inphase- und Quadratursignalwerten resultieren, einen Korrekturwert ($\tilde{\Psi}_E$) für den Quadraturfehler herleiten, dadurch gekennzeichnet, daß die zweiten Schaltungsmittel (KS) als Korrekturwert ($\tilde{\Psi}_E$) den Gradienten des quadratischen Entscheiderfehlers ($e_I$, $e_Q$) bilden.

2. QAM - Empfänger nach Anspruch 1, dadurch gekennzeichnet, daß die zweiten Schaltungsmittel (KS) aus den Koeffizienten $C_{II}$, $c_{IQ}$, $C_{IQ}$, und $C_{QQ}$, welche folgende Abhängigkeit von einer geschätzten Differenzphase $\hat{\phi}_\Delta$ zwischen Sender- und Empfängerträgerfrequenz, einer geschätzten Empfängerträgerphase $\hat{\phi}_E$, einem geschätzten Empfängerquadraturfehler $\hat{\psi}_E$ und dem geschätzten Senderquadraturfehler $\hat{\psi}_S$ aufweisen:

$$C_{II}(n) = \frac{\cos(n\hat{\phi}_\Delta + \hat{\phi}_E - \hat{\psi}_S + \hat{\psi}_E)}{\cos 2\hat{\psi}_S \cos 2\hat{\psi}_E}$$

$$C_{IQ}(n) = \frac{-\sin(n\hat{\phi}_\Delta + \hat{\phi}_E + \hat{\psi}_S + \hat{\psi}_E)}{\cos 2\hat{\psi}_S \cos 2\hat{\psi}_E}$$

$$C_{QI}(n) = \frac{\sin(n\hat{\phi}_\Delta + \hat{\phi}_E - \hat{\psi}_S - \hat{\psi}_E)}{\cos 2\hat{\psi}_S \cos 2\hat{\psi}_E}$$

$$C_{QQ}(n) = \frac{\cos(n\hat{\phi}_\Delta + \hat{\phi}_E + \hat{\psi}_S - \hat{\psi}_E)}{\cos 2\hat{\psi}_S \cos 2\hat{\psi}_E},$$

aus den empfangenen Inphase- und Quadratursignalkomponenten $Z_{Ist,I}$ und $Z_{Ist,Q}$ und aus den Entscheiderfehlern $e_I$ und $e_Q$ im Inphase- und Quadraturzweig mit Multiplizierern, Addierern und Sign- Funktionsoperatoren folgenden Korrekturwert $\tilde{\Psi}_E$ für den Empfängerquadraturfehler bilden:

$$\begin{aligned}
\tilde{\Psi}_E \quad &= \quad \text{sign}(e_I)\,(+\text{sign}(C_{IQ}\,z_{Ist,I}) \\
&\qquad\qquad -\text{sign}(C_{QQ}\,z_{Ist,Q})) \\
&+ \quad \text{sign}(e_Q)\,(+\text{sign}(C_{QI}\,z_{Ist,Q}) \\
&\qquad\qquad -\text{sign}(C_{II}\,z_{Ist,I}))\,.
\end{aligned}$$

3. QAM - Empfänger nach Anspruch 1, dadurch gekennzeichnet, daß die zweiten Schaltungsmittel (KS) aus den Koeffizienten $C_{II}$, $C_{IQ}$, $C_{IQ}$, und $C_{QQ}$, welche folgende Abhängigkeit von einer geschätzten Differenzphase $\hat{\phi}_\Delta$ zwischen Sender- und Empfängerträgerfrequenz, einer geschätzten Empfängerträgerphase $\hat{\phi}_E$, einem geschätzten Empfängerquadraturfehler $\hat{\psi}_E$ und dem geschätzten Senderquadraturfehler $\hat{\psi}_S$ aufweisen:

$$C_{II}(n) = \cos(n\hat{\phi}_\Delta + \hat{\phi}_E - \hat{\psi}_S + \hat{\psi}_E)$$

$$C_{IQ}(n) = -\sin(n\hat{\phi}_\Delta + \hat{\phi}_E + \hat{\psi}_S + \hat{\psi}_E)$$

$$C_{QI}(n) = \sin(n\hat{\phi}_\Delta + \hat{\phi}_E - \hat{\psi}_S - \hat{\psi}_E)$$

$$C_{QQ}(n) = \cos(n\hat{\phi}_\Delta + \hat{\phi}_E + \hat{\psi}_S + \hat{\psi}_E),$$

aus den empfangenen Inphase- und Quadratursignalkomponenten $Z_{Ist,I}$ und $Z_{Ist,Q}$ und aus den Entscheiderfehlern $e_I$ und $e_Q$ im Inphase- und Quadraturzweig mit Multiplizierern, Addierern und Sign- Funktionsoperatoren folgenden Korrekturwert $\tilde{\Psi}_E$ für den Empfängerquadraturfehler bilden:

$$
\begin{aligned}
\tilde{\Psi}_E \quad = \quad & \mathrm{sign}(e_I)\,(-\mathrm{sign}(C_{IQ}\,z_{Ist,I}) \\
& \qquad -\mathrm{sign}(C_{QQ}\,z_{Ist,Q})) \\
+ \quad & \mathrm{sign}(e_Q)\,(-\mathrm{sign}(C_{QI}\,z_{Ist,Q}) \\
& \qquad -\mathrm{sign}(C_{II}\,z_{Ist,I}))\ .
\end{aligned}
$$

## Claims

1. QAM receiver having first circuit means (QFK), which weight the in-phase and quadrature signal components of a received QAM (quadrature amplitude modulated) signal with coefficients which depend on the quadrature error of the QAM signal components demodulated in the receiver, and having second circuit means (KS), which derive a correction value ($\tilde{\Psi}_E$) for the quadrature error from decision unit errors ($e_I$, $e_Q$) resulting from the deviation of the in-phase and quadrature signal values decided by decision units ($E_I$, $E_Q$) with respect to the in-phase and quadrature signal values fed to the decision units ($E_I$, $E_Q$) by the first circuit means (QTK), characterized in that the second circuit means (KS) form the gradient of the quadratic decision unit error ($e_I$, $e_Q$) as correction value ($\tilde{\Psi}_E$).

2. QAM receiver according to Claim 1, characterized in that the second circuit means (KS) form from the coefficients $C_{II}$, $C_{IQ}$, $C_{QI}$, and $C_{QQ}$, which have the following dependence on an estimated differential phase $\hat{\phi}_\Delta$ between transmitter and receiver carrier frequencies, an estimated receiver carrier phase $\hat{\phi}_E$, an estimated receiver quadrature error $\hat{\psi}_E$ and the estimated transmitter quadrature error $\hat{\psi}_S$:

$$C_{II}(n) = \frac{\cos(n\hat{\phi}_\Delta + \hat{\phi}_E - \hat{\psi}_S + \hat{\psi}_E)}{\cos 2\hat{\psi}_S \cos 2\hat{\psi}_E}$$

$$C_{IQ}(n) = \frac{-\sin(n\hat{\phi}_\Delta + \hat{\phi}_E + \hat{\psi}_S + \psi_E)}{\cos 2\hat{\psi}_S \cos 2\hat{\psi}_E}$$

$$C_{QI}(n) = \frac{\sin(n\hat{\phi}_\Delta + \hat{\phi}_E - \hat{\psi}_S - \hat{\psi}_E}{\cos 2\hat{\psi}_S \cos 2\hat{\psi}_E}$$

$$C_{QQ}(n) = \frac{\cos(n\hat{\phi}_\Delta + \hat{\phi}_E + \hat{\psi}_S - \hat{\psi}_E)}{\cos 2\hat{\psi}_S \cos 2\hat{\psi}_E},$$

from the received in-phase and quadrature signal components $Z_{actual,I}$ and $Z_{actual,Q}$ and from the decision unit errors $e_I$ and $e_Q$ in the in-phase and quadrature branches with multipliers, adders and sign function operators the following correction value $\tilde{\Psi}_E$ for the receiver quadrature error:

$$\widetilde{\Psi}_E = \text{sign}(e_I)\,(+\text{sign}(C_{IQ}\ z_{actual,I})$$
$$-\text{sign}(C_{QQ}\ z_{actual,Q}))$$
$$+\ \text{sign}(e_Q)\,(+\text{sign}(C_{QI}\ z_{actual,Q})$$
$$-\text{sign}(C_{II}\ z_{actual,I})).$$

3. QAM receiver according to Claim 1, characterized in that the second circuit means (KS) form from the coefficients $C_{II}$, $C_{IQ}$, $C_{QI}$, and $C_{QQ}$, which have the following dependence on an estimated differential phase $\hat{\varphi}_\Delta$ between transmitter and receiver carrier frequencies, an estimated receiver carrier phase $\hat{\varphi}_E$, an estimated receiver quadrature error $\hat{\psi}_E$ and the estimated transmitter quadrature error $\hat{\psi}_S$:

$$C_{II}(n) = \cos(n\hat{\varphi}_\Delta + \hat{\varphi}_E - \hat{\psi}_S + \hat{\psi}_E)$$

$$C_{IQ}(n) = -\sin(n\hat{\varphi}_\Delta + \hat{\varphi}_E + \hat{\psi}_S + \hat{\psi}_E)$$

$$C_{QI}(n) = \sin(n\hat{\varphi}_\Delta + \hat{\varphi}_E - \hat{\psi}_S - \hat{\psi}_E)$$

$$C_{QQ}(n) = \cos(n\hat{\varphi}_\Delta + \hat{\varphi}_E + \hat{\psi}_S - \hat{\psi}_E),$$

from the received in-phase and quadrature signal components $Z_{actual,I}$ and $Z_{actual,Q}$ and from the decision unit errors $e_I$ and $e_Q$ in the in-phase and quadrature branches with multipliers, adders and sign function operators the following correction value $\widetilde{\Psi}_E$ for the receiver quadrature error:

$$\widetilde{\Psi}_E = \text{sign}(e_I)\,(-\text{sign}(C_{IQ}\ z_{actual,I})$$
$$-\text{sign}(C_{QQ}\ z_{actual,Q}))$$
$$+\ \text{sign}(e_Q)\,(-\text{sign}(C_{QI}\ z_{actual,Q})$$
$$-\text{sign}(C_{II}\ z_{actual,I})).$$

**Revendications**

1. Récepteur MAQ comprenant des premiers moyens de commutation (QFK) exploitant les composantes en phase et en quadrature d'un signal MAQ reçu (signal à modulation d'amplitude en quadrature) pondéré avec des coefficients dépendants de l'erreur de quadrature des composantes de signal MAQ démodulées dans le récepteur et des seconds moyens de commutation (KS) qui utilisent les erreurs de décideurs ($e_I$, $e_Q$) qui déduisent une valeur de correction ($\hat{\psi}_E$) pour l'erreur de quadrature résultant du dépôt des valeurs de signal en phase et en quadrature décidées par les décideurs ($E_I$, $E_Q$) par rapport aux valeurs des signaux en phase et en quadrature fournies par les premiers moyens de commutation (QTK) aux décideurs ($E_I$, $E_Q$),
caractérisé en ce que
les seconds moyens de commutation (KS) forment comme valeur de correction ($\hat{\psi}_E$), les gradients de l'erreur quadratique de décideurs ($e_I$, $e_Q$).

2. Récepteur MAQ selon la revendication 1,
caractérisé en ce que
partant des coefficients ($C_{II}$, $C_{IQ}$, $C_{IQ}$, et $C_{QQ}$) qui ont la relation suivante, par rapport à une différence de phase, évaluée ($\hat{\varphi}_\Delta$) entre la fréquence d'émetteur et la fréquence de récepteur d'une phase de porteuse de réception,

évaluée ($\hat{\phi}_E$), attribuée à une erreur de quadrature de récepteur ($\hat{\psi}_E$), et à l'erreur de quadrature de récepteur ($\hat{\psi}_S$) évaluée, prennent les valeurs suivantes :

$$C_{II}(n) = \frac{\cos(n\hat{\phi}_\Delta + \hat{\phi}_E - \hat{\psi}_S + \hat{\psi}_E)}{\cos 2\hat{\psi}_S \cos 2\hat{\psi}_E}$$

$$C_{IQ}(n) = \frac{-\sin(n\hat{\phi}_\Delta + \hat{\phi}_E + \hat{\psi}_S + \hat{\psi}_E)}{\cos 2\hat{\psi}_S \cos 2\hat{\psi}_E}$$

$$C_{QI}(n) = \frac{\sin(n\hat{\phi}_\Delta + \hat{\phi}_E - \hat{\psi}_S - \hat{\psi}_E)}{\cos 2\hat{\psi}_S \cos 2\hat{\psi}_E}$$

$$C_{QQ}(n) = \frac{\cos(n\hat{\phi}_\Delta + \hat{\phi}_E + \hat{\psi}_S - \hat{\psi}_E)}{\cos 2\hat{\psi}_S \cos 2\hat{\psi}_E},$$

à partir des composantes de signal en phase et en quadrature, reçues $z_{Réel,I}$ et $z_{Réel,Q}$, et à partir des erreurs de décideurs ($e_I$ et $e_Q$) dans la branche en phase et en quadrature, les seconds moyens de commutation (KS) forment avec des multiplicateurs, les additionneurs et les opérateurs de fonction Sign, la valeur de correction suivante ($\hat{\psi}_S$) pour l'erreur de quadrature de récepteur :

$$\tilde{\Psi}_E = \text{sign}(e_I)\,(+\text{sign}(C_{IQ}\,z_{Réel,I}) \\ -\text{sign}(C_{QQ}\,z_{Réel,Q})) \\ +\,\text{sign}(e_Q)\,(+\text{sign}(C_{QI}\,z_{Réel,Q}) \\ -\text{sign}(C_{II}\,z_{Réel,I}))\,.$$

3. Récepteur MAQ selon la revendication 1, caractérisé en ce que les seconds moyens de commutation (KS), partant des coefficients ($C_{II}$, $C_{IQ}$, $C_{IQ}$, et $C_{QQ}$), qui présentent la relation suivante à partir d'une différence de phase évaluée ($\hat{\phi}_\Delta$), entre la fréquence d'émetteur et la fréquence de récepteur, une phase de porteuse de réception ($\hat{\phi}_E$), une erreur de quadrature de réception évaluée ($\hat{\psi}_E$) et l'erreur en quadrature d'émetteur, évaluée ($\hat{\psi}_S$) :

$$C_{II}(n) = \cos(n\hat{\phi}_\Delta + \hat{\phi}_E - \hat{\psi}_S + \hat{\psi}_E)$$

$$C_{IQ}(n) = -\sin(n\hat{\phi}_\Delta + \hat{\phi}_E + \hat{\psi}_S + \hat{\psi}_E)$$

$$C_{QI}(n) = \sin(n\hat{\phi}_\Delta + \hat{\phi}_E - \hat{\psi}_S - \hat{\psi}_E)$$

$$C_{QQ}(n) = \cos(n\hat{\phi}_\Delta + \hat{\phi}_E + \hat{\psi}_S - \hat{\psi}_E)$$

à partir des composantes du signal reçu, en phase et en quadrature $z_{Réel,I}$ et $z_{Réel,Q}$ et à partir des erreurs de décideurs ($e_I$ et $e_Q$) dans la branche en phase et en quadrature ils forment avec les multiplicateurs, additionneurs et opérateurs de fonction (Sign), la valeur de correction ($\hat{\psi}_E$) pour l'erreur de quadrature d'émetteur :

$$\bar{\Psi}_E \;=\; \mathrm{sign}(e_I)\,(-\mathrm{sign}(C_{IQ}\; z_{\mathrm{R\acute{e}el},\,I})$$
$$-\mathrm{sign}(C_{QQ}\; z_{\mathrm{R\acute{e}el},Q}))$$
$$+\; \mathrm{sign}(e_Q)\,(-\mathrm{sign}(C_{QI}\; z_{\mathrm{R\acute{e}el},Q})$$
$$-\mathrm{sign}(C_{II}\; z_{\mathrm{R\acute{e}el},\,I}))\,.$$

Fig.1

Fig. 2